# EUROPÄISCHE PATENTSCHRIFT

(11) **EP 3 068 676 B1**
(45) Veröffentlichungstag und Bekanntmachung des Hinweises auf die Patenterteilung: **27.06.2018**
(21) Anmeldenummer: 14801970.6
(22) Anmeldetag: 11.11.2014
(51) Int. Cl.: B61F 1/00, F16F 15/02, F16D 55/224, B61H 13/36, F16F 15/04, B61F 3/02, B61H 5/00, F16D 65/02, F16D 65/00, F16D 57/00, F16D 55/00, F16D 65/04

(54) **VORRICHTUNG ZUR REDUKTION VON SCHWINGUNGEN EINES FAHRZEUGES, INSBESONDERE EINES SCHIENENFAHRZEUGES**
DEVICE FOR REDUCING VIBRATIONS OF A VEHICLE, IN PARTICULAR A RAIL VEHICLE
DISPOSITIF PERMETTANT DE RÉDUIRE LES VIBRATIONS D'UN VÉHICULE, EN PARTICULIER D'UN VÉHICULE FERROVIAIRE

(30) Priorität: 13.11.2013 AT 507572013
(43) Veröffentlichungstag der Anmeldung: 21.09.2016
(73) Patentinhaber: Siemens AG Österreich, 1210 Wien (AT)
(72) Erfinder: KÜTER, Christian, A-8046 Stattegg (AT); RACKL, Hugo, A-8046 Stattegg (AT); SCHOBEGGER, Gerald, A-8051 Graz (AT); TEICHMANN, Martin, A-8045 Graz (AT)
(74) Vertreter: Maier, Daniel Oliver
(86) Internationale Anmeldenummer: PCT/EP2014/074257
(87) Internationale Veröffentlichungsnummer: WO 2015/071254

(56) Entgegenhaltungen:
- EP-A1- 0 568 044
- DE-A1- 3 223 799
- US-A- 2 334 024
- US-A- 2 467 356

## Beschreibung

### Technisches Gebiet

Die Erfindung betrifft eine Vorrichtung zur Reduktion von Schwingungen eines Fahrzeuges, insbesondere eines Schienenfahrzeuges, wobei die Vorrichtung zumindest einen Fahrwerksrahmen, einen Bremsträger einer mechanisch wirkenden Bremseinheit sowie eine Aufhängung umfasst, wobei Fahrwerksrahmen und Bremsträger durch die Aufhängung miteinander verbunden sind (siehe z.B. die EP 0 568 044 A1, dem Oberbegriff entsprechend). Als mechanisch wirkende Bremseinheiten werden dabei insbesondere Scheibenbremsen und Klotzbremsen angesehen, nicht jedoch Magnetschienenbremsen oder Wirbelstrombremsen.

### Stand der Technik

Bei der Fortbewegung von Schienenfahrzeugen am Gleis treten durch den Rad-Schiene-Kontakt im Fahrwerk Schwingungen auf, welche sich als Luft- oder Körperschall äußern und im Falle des Körperschalls die mögliche Fahrgeschwindigkeit begrenzen. Eine der Ursachen für derartige Schwingungen liegt in der Konizität der Räder des Fahrwerks, welche eine Schwingung des Fahrwerks quer zur Fahrtrichtung hervorruft. Mit zunehmender Geschwindigkeit des Schienenfahrzeugs nimmt die Frequenz der Schwingungen zu, während die Dämpfung abnimmt. Es ist deshalb besonders bei hohen Geschwindigkeiten notwendig, solche Schwingungen zu dämpfen.

Es ist bekannt, Schwingungen durch zusätzliche Schwingmassen (Tilgermassen) teilweise auszulöschen, die gegenläufig zu den zu tilgenden Schwingungen schwingen. Der Nachteil dabei ist, dass zusätzliche Massen unerwünscht sind, weil diese das Fahrwerk schwerer machen und daher die benötigte Antriebsenergie für das Fahrzeug erhöht werden müsste.

### Darstellung der Erfindung

Es ist daher eine Aufgabe der vorliegenden Erfindung, eine Vorrichtung für Fahrzeuge, insbesondere Schienenfahrzeuge, zur Verfügung zu stellen, welche einen Fahrwerksrahmen sowie eine Bremseinheit und eine beide Teile verbindende Aufhängung umfasst, welche die Schwingungen des Fahrwerks dämpft.

Diese Aufgabe wird durch eine Vorrichtung mit den Merkmalen des Patentanspruchs 1 gelöst. Vorteilhafte Ausgestaltungen der Erfindung sind in den jeweiligen abhängigen Ansprüchen definiert.

Dabei ist erfindungsgemäß vorgesehen, dass die Aufhängung zumindest ein den Fahrwerksrahmen mit dem Bremsträger verbindendes elastisches Element aufweist, welches eine Bewegung des Bremsträgers in Querrichtung des Fahrwerksrahmens zulässt. Durch diese Kopplung wird der Bremsträger mit allen enthaltenen Bremskomponenten (z.B. Bremszangen, Bremsbelägen, Bremsklötzen, ...) zumindest teilweise vom Fahrwerk entkoppelt und als Schwingmasse eingesetzt. Dadurch, dass diese Teile in der Regel aus Materialien wie beispielsweise einer Metalllegierung oder Stahl gefertigt sind, ist ein für die Tilgung notwendiges Gewicht gewährleistet. Die Schwingungsenergie aus Querschwingungen wird von der Schwingmasse aufgenommen, dort zwischengespeichert und gegenphasig in die zu dämpfende Anordnung, hier den Fahrwerksrahmen, rückgespeist, wodurch die zu tilgenden Schwingungen dort ganz oder zumindest teilweise eliminiert werden. Dadurch kann die Grenzgeschwindigkeit von Fahrwerken, insbesondere auch von Lauffahrwerken, erhöht werden.

Die Querrichtung des Fahrwerksrahmens ist jene, die beim Betrieb des Schienenfahrzeugs normal zur Fahrtrichtung verläuft. Die Querrichtung ist damit in der Regel parallel zur Längserstreckung der Querträger des Fahrwerksrahmens bzw. normal zur Längserstreckung der Längsträger des Fahrwerksrahmens.

Um hauptsächlich Querschwingungen zu dämpfen, ist erfindungsgemäß vorgesehen, dass das elastische Element in Querrichtung des Fahrwerksrahmens eine größere Elastizität aufweist als in Längsrichtung des Fahrwerksrahmens. Weiterhin erfindungsgemäß ist vorgesehen, dass das elastische Element nur in Querrichtung eine Elastizität aufweist, in anderen Richtungen nicht (ausgenommen die unvermeidbare Elastizität, die jeder reale feste Körper ohne Weiteres aufweist).
Die Längsrichtung des Fahrwerksrahmens ist jene, die beim Betrieb des Schienenfahrzeugs in Fahrtrichtung verläuft. Die Längsrichtung ist damit in der Regel parallel zur Längserstreckung der Längsträger des Fahrwerksrahmens.
Eine Ausführungsform besteht darin, dass das elastische Element eine Blattfeder umfasst. Insbesondere kann die Blattfeder allein das elastische Element bilden. Damit die Bewegung des Bremsträgers zur Gänze oder zumindest hauptsächlich in Querrichtung des Fahrwerksrahmens stattfindet, kann die Ebene der Blattfeder normal zur Querrichtung des Fahrwerksrahmens ausgerichtet werden. Durch Variation der Länge, Breite, Dicke und des Materials der Blattfeder können die elastischen Eigenschaften der Blattfeder eingestellt werden.
Um die Beweglichkeit der Blattfeder in Querrichtung zu unterstützen, kann vorgesehen sein, dass die Blattfeder an einer elastisch ausgekleideten Lagerbuchse befestigt ist, welche auf einem in Fahrtrichtung am Fahrwerksrahmen fest angeordneten Lagerbolzen gelagert ist.

Eine andere Ausführungsform der Erfindung besteht darin, dass das elastische Element eine Schichtfeder umfasst. Eine Schichtfeder enthält zumindest eine Lage aus einem Elastomer, z.B. Gummi, und eine Lage aus einem Nicht-Elastomer, z.B. aus Blech bzw. Stahl. Es können auch mehrere Lagen aus Elastomer und Nicht-Elastomer zu einer Schichtfeder zusammengesetzt werden. Dabei können unterschiedliche Elastomere für unterschiedliche Lagen verwendet werden, je nach gewünschter Eigenschaft. Die einzelnen Lagen sind in der Regel plan und parallel zueinander angeordnet.

Damit die Bewegung des Bremsträgers zur Gänze oder zumindest hauptsächlich in Querrichtung des Fahrwerksrahmens stattfindet, können die einzelnen Lagen der Schichtfeder normal zur Querrichtung des Fahrwerksrahmens ausgerichtet werden. Eine noch bessere Wirkung lässt sich erzielen, wenn pro Aufhängung (also pro Rad des Fahrwerks) zwei oder mehr Schichtfedern nebeneinander angeordnet werden, weil die beiden Schichtfedern dann bei Bewegungen in anderen Richtungen (in Fahrtrichtung und/oder in Längsrichtung des Fahrwerksrahmens) entlang der Verbindungslinie der beiden Schichtfedern gegeneinander wirken.

Eine weitere Ausführungsform der Erfindung besteht darin, dass die Aufhängung ein Querpendel umfasst und das elastische Element als Federelement und/oder Feder-Dämpfer-Element ausgebildet ist. Ein Querpendel ist im Wesentlichen eine Stange, die um eine Achse in Längsrichtung des Fahrwerksrahmens drehbar gelagert ist. Die Elastizität wird entweder nur durch Federelemente oder durch kombinierte Feder-Dämpferelemente sichergestellt, die dann in Querrichtung ausgerichtet sind, sodass die Federn und/oder Dämpfer bei einer Bewegung des Bremsträgers in Querrichtung gedehnt oder gestaucht werden. Dabei könnte das Querpendel direkt am Fahrwerksrahmen angelenkt und über zumindest eine Feder oder ein Feder-Dämpferelement mit dem Bremsträger verbunden sein, oder es könnte das Querpendel direkt sowohl am Fahrwerksrahmen als auch am Bremsträger angelenkt sein, wobei dann auch die Federelemente (oder die Feder-Dämpferelemente) Fahrwerksrahmen und Bremsträger direkt miteinander verbinden würden.

Eine weitere Ausführungsform der Erfindung besteht darin, dass die Aufhängung eine Linearführung umfasst und das elastische Element als Federelement und/oder Feder-Dämpfer-Element ausgebildet ist. Unter einer Linearführung versteht man hier ein Element, das eine möglichst reibungsfreie Translation des Bremsträgers in Querrichtung ermöglicht und dabei gleichzeitig die Einhaltung dieser Bewegungsrichtung garantiert. Dabei könnte die Linearführung an einer Seite direkt am Fahrwerksrahmen befestigt sein und an der anderen Seite über zumindest eine Feder oder ein Feder-Dämpferelement mit dem Bremsträger verbunden sein. Oder es könnte die Linearführung direkt sowohl am Fahrwerksrahmen als auch am Bremsträger befestigt sein, wobei dann auch die Federelemente (oder die Feder-Dämpferelemente) Fahrwerksrahmen und Bremsträger direkt miteinander verbinden würden. Die Linearführung einerseits und die Federelemente bzw. Feder-Dämpferelemente andererseits wären dann parallel zueinander geschaltet.

In der Regel wird eine Aufhängung nur eine Art von elastischen Elementen enthalten, also etwa nur eine Blattfeder oder nur eine oder zwei oder mehrere Schichtfedern. Grundsätzlich sind aber auch Kombinationen von unterschiedlichen elastischen Elementen in einer Aufhängung denkbar, also z.B. Blattfedern mit Schichtfedern.

Der Bremsträger kann zumindest eine Bremszange für eine Scheibenbremse tragen, wenn die erfindungsgemäße Vorrichtung für eine Scheibenbremse ausgelegt ist. Die Scheibenbremse ist eine Bauform von Bremsen, bei der die Verzögerung durch eine auf der Radnabe oder der Radachse befestigte Bremsscheibe und den im Bremssattel (Bremszange) liegenden Bremsklotz mit Bremsbelägen erzeugt wird. Je mehr Bremszangen der Bremsträger ausweist, umso größer die Masse des Systems aus Bremsträger und Bremszangen und umso größer die Dämpfung.

Der Bremsträger kann zumindest einen Bremsklotz für eine Klotzbremse tragen, wenn die erfindungsgemäße Vorrichtung für eine Klotzbremse ausgelegt ist. Klotzbremsen werden teilweise noch in Schienenfahrzeugen eingesetzt. Bei der Klotzbremse wird entweder über ein Bremsgestänge oder über pneumatische oder hydraulische Vorrichtungen ein Bremsklotz an das zu bremsende bewegliche Teil gedrückt. Oft drückt der Bremsklotz direkt auf die Lauffläche von Rädern, so beispielsweise bei Eisenbahn-Güterwaggons. Der Bremsklotz kann nicht nur aus Metall, sondern auch aus einem Kunstharz-Verbundwerkstoff bestehen. Die Klotzbremse muss jedoch nicht am Rad angreifen, sondern der Bremsklotz könnte - ähnlich einer Backenbremse - am Mantel eines auf der Radachse befestigten Zylinders angreifen.

Bei einem hydrodynamischen Retarder (oder Strömungsbremse oder hydraulische Strömungsbremse) befinden sich in einem Gehäuse zwei Schaufelräder, ein Rotor (ein sich drehendes Schaufelrad) und ein Stator (ein stillstehendes Schaufelrad). Beim Bremsen wird mehr oder weniger Öl vom Rotor, der mit der Radachse verbunden ist, gegen den stillstehenden Stator gedrückt. Das Öl wird im Stator verzögert, umgelenkt und gelangt wieder zum Rotor. Dadurch werden der Rotor und somit auch das Fahrzeug gebremst. Der gesamte hydrodynamische Retarder würde bei erfindungsgemäßer Ausführung am Bremsträger befestigt sein, zusätzlich wäre noch eine Kupplung nötig, welche das Bremsmoment von der Radachse auf den Retarder überträgt. Diese Kupplung müsste in Querrichtung des Fahrwerks elastisch ausgeführt sein. Hierfür käme zum Beispiel eine Bogenzahnkupplung in Frage.

Eine bevorzugte Ausführungsform der Erfindung sieht vor, dass die Aufhängung direkt am Bremsträger sowie am Fahrwerksrahmen angreift, dass sich also etwa keine Antriebsaggregate zwischen Bremsträger und Fahrwerksrahmen befinden. Insofern ist die Erfindung für Lauffahrwerke geeignet, die also keinen Antrieb umfassen. Der Fahrwerksrahmen umfasst dann neben der mechanisch wirkenden Bremseinheit und der Aufhängung für deren Bremsträger zusätzlich zumindest Räder und Radachsen.

Es muss das elastische Element aber nicht unmittelbar mit den jeweiligen zu verbindenden Teilen, Fahrwerksrahmen und Bremsträger, verbunden sein. Vielmehr ist es möglich, dass das elastische Element zwar eine Verbindung darstellt, aber zwischen dem elastischen Element und den zu verbindenden Teilen noch weitere Bauteile einer Aufhängung, beispielsweise Befestigungsplatten oder Gelenke oder sonstige Zwischenelemente, vorhanden sind.

Generell kann die Aufhängung zusätzlich zum elastischen Element über ein Dämpferelement verfügen, welches die Schwingungen des elastischen Elements dämpft, etwa einen an einer Kolbenstange in einem ölgefüllten Zylinder geführten Kolben.

### Kurzbeschreibung der Figuren

Zur weiteren Erläuterung der Erfindung wird im nachfolgenden Teil der Beschreibung auf die Figuren Bezug genommen, aus der weitere vorteilhafte Ausgestaltungen, Einzelheiten und Weiterbildungen der Erfindung zu entnehmen sind. Es zeigen:
Fig. 1 eine axonometrische Ansicht eines Ausschnitts einer erfindungsgemäßen Vorrichtung mit Bremsträger und Bremszangeneinheiten,
Fig. 2 die Vorrichtung aus Fig. 1 ohne Fahrwerksrahmen.

### Ausführung der Erfindung

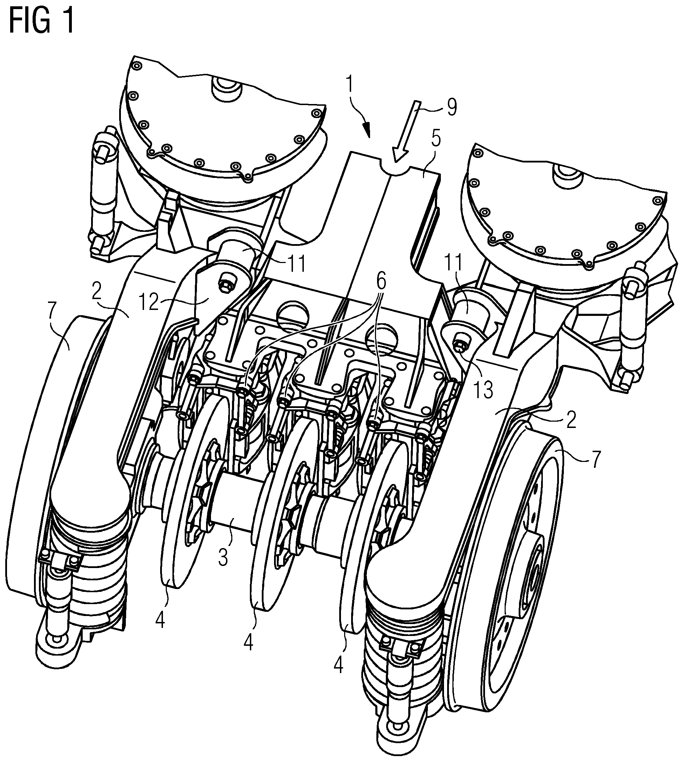

Figur 1 zeigt eine Scheibenbremse 1, welche am Fahrwerksrahmen zwischen dessen Längsträgern 2 angeordnet ist. Eine Scheibenbremse 1 besteht aus einer oder hier mehreren, mit der Radachse 3 verbundenen Bremsscheiben 4 und dem Bremsträger 5, an dem die - hier drei - Bremszangen 6, die auch als Bremssättel bezeichnet werden, befestigt sind. Eine Bremszange 6 umgreift jeweils eine Bremsscheibe 4 und enthält an jeder Seite der Bremsscheibe 4 Bremsbeläge und die Bremskolben, welche die Bremsbeläge axial gegen die Bremsscheibe 4 drücken.

In Fig. 1 ist nur das halbe Fahrwerk dargestellt, das ganze Fahrwerk umfasst zwei zueinander parallele Radachsen 3 mit jeweils zwei Rädern 7. Die zweite, nicht dargestellte Hälfte des Fahrwerks ist symmetrisch zur dargestellten Hälfte ausgebildet. Der Bremsträger 5 setzt sich somit ebenfalls symmetrisch fort und verfügt daher über insgesamt sechs Bremszangen 6. Die erfindungsgemäße Vorrichtung kann aber auch genauso wie hier dargestellt ausgeführt sein, indem der Bremsträger 5 in der Mitte des Fahrwerks endet und eben nur Bremszangen 6 für die Bremsscheiben 4 einer Radachse 3 aufweist.

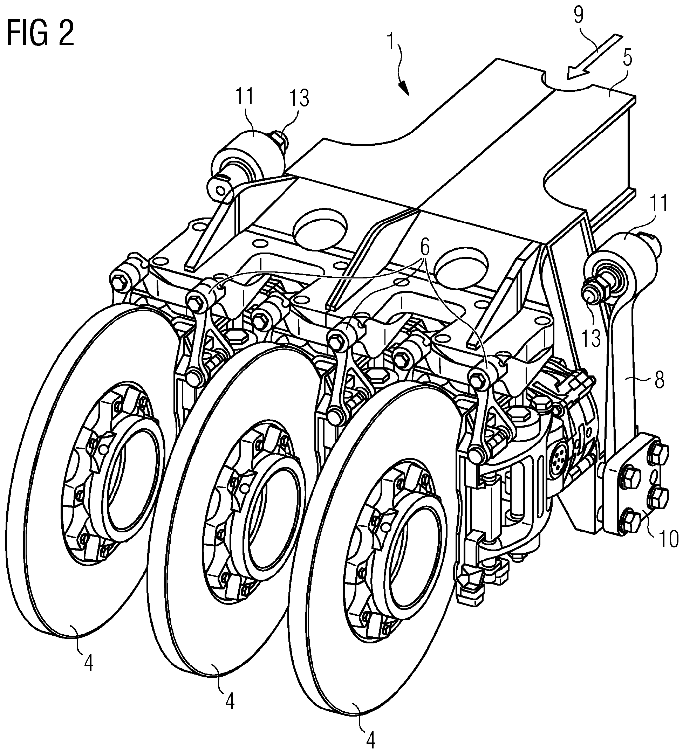

Die Aufhängung des Bremsträgers 5 verfügt in diesem Ausführungsbeispiel über zwei am Fahrwerksrahmen (an den Längsträgern 2) befestigte Blattfedern 8, eine an jeder Seite des Bremsträgers. Die Blattfedern 8 sind in der Regel aus Stahl gefertigt. Dies ist in Fig. 2 besser zur erkennen, weil dort die Längsträger 2 und die Räder 7 nicht dargestellt sind. An jeder Längsseite des Bremsträgers 5 ist pro Radachse eine Blattfeder 8 vorgesehen, deren Fläche parallel zur Fahrtrichtung 9 ausgerichtet ist. Dabei weist die Blattfeder 8 in ihrer Längsrichtung eine größere Komponente in Richtung der Hochachse des Fahrwerks (normal zur Fahrtrichtung 9 und zu den Radachsen 3) auf als in Querrichtung des Fahrwerks (parallel zur Radachse 3). Im gegenständlichen Fall ist die Blattfeder parallel zur Hochachse ausgerichtet, also senkrecht im Betriebszustand des Fahrwerks.

Die Blattfeder 8 ist an einem Ende mittels einer Platte 10 am Bremsträger 5 befestigt. Sie ist mit dem anderen Ende an einer Lagerbuchse 11 befestigt, die innen mit einem elastischen Material ausgekleidet ist und über dieses elastische Material mit dem Fahrwerksrahmen verbunden ist, etwa durch einen Bolzen, der in einer Konsole 12 gelagert ist, wobei die Konsole 12 fest mit dem Fahrwerksrahmen (hier dem jeweiligen Längsträger 2) verbunden ist. Die Lagerbuchsen 11 sind dabei in Fahrtrichtung 9 ausgerichtet. Die elastische Auskleidung der Lagerbuchse 11 bewirkt, dass die Quersteifigkeit der Blattfeder 8 verringert wird. Die beiden in Fig. 2 eingezeichneten Blattfedern 8 sind bezüglich der Fahrtrichtung 9 symmetrisch zueinander angeordnet.

Der Bremsträger 5 mit den Bremszangen 6 kann nun quer zur Fahrtrichtung 9 um die Lagerbolzen 13 schwingen und dabei als Schwingmasse unerwünschte Schwingungen tilgen.

Wenn der Bremsträger 5 sich symmetrisch in Längsrichtung des Fahrwerksrahmens fortsetzt, dann verfügt dessen Aufhängung über insgesamt vier Blattfedern 8.

Für alle Ausführungsformen gilt, dass die Steifigkeit und die Dämpfung der elastischen Elemente in Querrichtung des Fahrwerksrahmens an die Masse der entsprechenden Bremsträger samt daran befestigten Bremskomponenten und das Fahrwerk abzustimmen ist. Die notwendige Elastizität bzw. Steifigkeit der erfindungsgemäßen elastischen Elemente wird daher vorab berechnet und die elastischen Elemente werden mit definierter Elastizität, insbesondere Querelastizität, bzw. Steifigkeit gefertigt. Ziel ist es, die Laufeigenschaften des Fahrwerks im Hinblick auf Schwingungen zu verbessern.

### Bezugszeichenliste:

- 1: Scheibenbremse (mechanisch wirkende Bremseinheit)
- 2: Längsträger des Fahrwerksrahmens
- 3: Radachse
- 4: Bremsscheibe
- 5: Bremsträger
- 6: Bremszange
- 7: Rad
- 8: Blattfeder (elastisches Element)
- 9: Fahrtrichtung
- 10: Platte
- 11: Lagerbuchse
- 12: Konsole
- 13: Lagerbolzen

## Patentansprüche

1. Vorrichtung zur Reduktion von Schwingungen eines Fahrzeuges, insbesondere eines Schienenfahrzeuges, wobei die Vorrichtung zumindest einen Fahrwerksrahmen (2), einen Bremsträger (5) einer mechanisch wirkenden Bremseinheit
(1) sowie eine Aufhängung (8, 10, 11-13) umfasst, wobei Fahrwerksrahmen (2) und Bremsträger (5) durch die Aufhängung (8, 10, 11-13) miteinander verbunden sind, und wobei die Aufhängung (8, 10, 11-13) zumindest ein den Fahrwerksrahmen (2) mit dem Bremsträger (5) verbindendes elastisches Element (8) aufweist, welches eine Bewegung des Bremsträgers (5) in Querrichtung des Fahrwerksrahmens
(2) zulässt, **dadurch gekennzeichnet, dass** das elastische Element (8) in Querrichtung des Fahrwerksrahmens (2) eine größere Elastizität aufweist als in Längsrichtung des Fahrwerksrahmens (2), d.h., dass das elastische Element (8) nur in Querrichtung eine Elastizität aufweist, in anderen Richtungen nicht, ausgenommen die unvermeidbare Elastizität, die jeder reale feste Körper ohne weiteres aufweist.

2. Vorrichtung nach Anspruch 1, **dadurch gekennzeichnet, dass** das elastische Element (8) eine Blattfeder (8) umfasst.

3. Vorrichtung nach Anspruch 1, **dadurch gekennzeichnet, dass** die Blattfeder (8) an einer elastisch ausgekleideten Lagerbuchse (11) befestigt ist, welche auf einem in Fahrtrichtung am Fahrwerksrahmen (2) fest angeordneten Lagerbolzen (13) gelagert ist.

4. Vorrichtung nach einem der Ansprüche 1 bis 3, **dadurch gekennzeichnet, dass** das elastische Element eine Schichtfeder umfasst.

5. Vorrichtung nach einem der Ansprüche 1 bis 4, **dadurch gekennzeichnet, dass** die Aufhängung ein Querpendel umfasst und das elastische Element als Federelement und/oder Feder-Dämpfer-Element ausgebildet ist.

6. Vorrichtung nach einem der Ansprüche 1 bis 5, **dadurch gekennzeichnet, dass** die Aufhängung eine Linearführung umfasst und das elastische Element als Federelement und/oder Feder-Dämpfer-Element ausgebildet ist.

7. Vorrichtung nach einem der Ansprüche 1 bis 6, **dadurch gekennzeichnet, dass** der Bremsträger (5) zumindest eine Bremszange (6) für eine Scheibenbremse (1) trägt.

8. Vorrichtung nach einem der Ansprüche 1 bis 6, **dadurch gekennzeichnet, dass** der Bremsträger zumindest einen Bremsklotz für eine Klotzbremse trägt.

9. Vorrichtung nach einem der Ansprüche 1 bis 6, **dadurch gekennzeichnet, dass** der Bremsträger zumindest einen hydrodynamischen Retarder trägt.

10. Vorrichtung nach einem der Ansprüche 1 bis 9, **dadurch gekennzeichnet, dass** die Aufhängung (8, 10, 11-13) direkt am Bremsträger (5) sowie am Fahrwerksrahmen (2) angreift.

11. Vorrichtung nach einem der Ansprüche 1 bis 10, **dadurch gekennzeichnet, dass** die Aufhängung (8, 10, 11-13) über ein Dämpferelement verfügt.

## Claims

1. Device for reducing vibrations of a vehicle, in particular a rail vehicle, wherein the device comprises at least a vehicle frame (2), a brake carrier (5) of a mechanically operative brake unit (1) and a suspension bracket (8, 10, 11-13), wherein vehicle frame (2) and brake carrier (5) are connected to one another by the suspension bracket (8, 10, 11-13), and wherein the suspension bracket (8, 10, 11-13) has at least one elastic element (8) connecting the vehicle frame (2) to the brake carrier (5), and which permits a movement of the brake carrier (5) in the transverse direction of the vehicle frame (2), **characterised in that** in the transverse direction of the vehicle frame (2) the elastic element (8) has a greater elasticity than in the longitudinal direction of the vehicle frame (2), i.e. the elastic element (8) has elasticity only in the transverse direction, and not in other directions, except for the unavoidable elasticity that every real solid body necessarily has.

2. Device according to claim 1, **characterised in that** the elastic element (8) comprises a laminated suspension spring (8).

3. Device according to claim 1, **characterised in that** the laminated suspension spring (8) is attached to an elastically lined bearing bush (11), which is mounted on a bearing bolt (13) fixedly connected to the vehicle frame (2) in the direction of travel.

4. Device according to one of claims 1 to 3, **characterised in that** the elastic element comprises a laminated spring.

5. Device according to one of claims 1 to 4, **characterised in that** the suspension bracket comprises a transverse pendulum and the elastic element is designed as a spring element and/or spring/damper element.

6. Device according to one of claims 1 to 5, **characterised in that** the suspension bracket comprises a linear guide and the elastic element is designed as a spring element and/or spring/damper element.

7. Device according to one of claims 1 to 6, **characterised in that** the brake carrier (5) supports at least one brake calliper (6) for a disk brake (1).

8. Device according to one of claims 1 to 6, **characterised in that** the brake carrier supports at least one brake shoe for a shoe brake.

9. Device according to one of claims 1 to 6, **characterised in that** the brake carrier supports at least one hydrodynamic retarder.

10. Device according to one of claims 1 to 9, **characterised in that** the suspension bracket (8, 10, 11-13) engages directly with the brake carrier (5) and the vehicle frame (2).

11. Device according to one of claims 1 to 10, **characterised in that** the suspension bracket (8, 10, 11-13) has a damper element.

## Revendications

1. Dispositif permettant de réduire les vibrations d'un véhicule, en particulier d'un véhicule ferroviaire, le dispositif comprenant au moins un cadre de bogie (2), un support de frein (5) d'une unité de freinage (1) agissant mécaniquement ainsi qu'une suspension (8, 10, 11-13), le cadre de bogie (2) et le support de frein (5) étant reliés entre eux par la suspension (8, 10, 11-13), et ladite suspension (8, 10, 11-13) comportant au moins un élément élastique (8) reliant le cadre de bogie (2) au support de frein (5) et qui autorise un déplacement du support de frein (5) dans la direction transversale du cadre de bogie (2), **caractérisé en ce que** l'élément élastique (8) présente dans la direction transversale du cadre de bogie (2) une plus grande élasticité que dans la direction longitudinale du cadre de bogie (2), c.-à-d. que l'élément élastique (8) ne présente une élasticité que dans la direction transversale et pas dans d'autres directions, exceptée l'élasticité inévitable que présente automatiquement tout corps solide réel.

2. Dispositif selon la revendication 1, **caractérisé en ce que** l'élément élastique (8) comprend un ressort à lames (8).

3. Dispositif selon la revendication 1, **caractérisé en ce que** le ressort à lames (8) est fixé sur un coussinet (11) muni d'un revêtement élastique et qui est monté sur un axe de palier (13) fixé solidairement au cadre de bogie (2) dans le sens de la marche.

4. Dispositif selon l'une des revendications 1 à 3, **caractérisé en ce que** l'élément élastique comprend un ressort stratifié.

5. Dispositif selon l'une des revendications 1 à 4, **caractérisé en ce que** la suspension comprend un pendule transversal et l'élément élastique est réalisé comme élément ressort et/ou élément ressort amortisseur.

6. Dispositif selon l'une des revendications 1 à 5, **caractérisé en ce que** la suspension comprend un guide linéaire et l'élément élastique est réalisé comme élément ressort et/ou élément ressort amortisseur.

7. Dispositif selon l'une des revendications 1 à 6, **caractérisé en ce que** le support de frein (5) supporte au moins un étrier de frein (6) pour un frein à disque (1).

8. Dispositif selon l'une des revendications 1 à 6, **caractérisé en ce que** le support de frein supporte au moins un sabot de frein pour un frein à sabot.

9. Dispositif selon l'une des revendications 1 à 6, **caractérisé en ce que** le support de frein supporte au moins un ralentisseur hydrodynamique.

10. Dispositif selon l'une des revendications 1 à 9, **caractérisé en ce que** la suspension (8, 10, 11-13) est disposée directement sur le support de frein (5) ainsi que sur le cadre de bogie (2).

11. Dispositif selon l'une des revendications 1 à 9, **caractérisé en ce que** la suspension (8, 10, 11-13) dispose d'un élément amortisseur.
